# EUROPÄISCHE PATENTANMELDUNG

(11) **EP 1 161 999 A1**
(43) Veröffentlichungstag der Anmeldung: **12.12.2001**
(21) Anmeldenummer: 01113800.5
(22) Anmeldetag: 06.06.2001
(51) Int. Cl.: B04C 11/00, B04C 5/14, G01P 13/00, G01P 5/02

(54) **Anordnung zum Abtasten des Unterlaufstrahls eines Hydrozyklons**

(30) Priorität: 06.06.2000 DE 10027976
(71) Anmelder: AKW Apparate + Verfahren GmbH & Co. KG, 92242 Hirschau (DE)
(72) Erfinder: Prölss, Gerhard, 90530 Wendelstein (DE); Heckmann, Thomas, 92242 Hirschau (DE)
(74) Vertreter: Kruspig, Volkmar, Dipl.-Ing.

(57) **Zusammenfassung**

Die Erfindung betrifft eine Anordnung zum Abtasten des Unterlaufstrahls eines Hydrozyklons, insbesondere zur Steuerung desselben durch Erfassung des Strahlumschlagens am Grobkornaustrag mittels einer Meßsonde, wobei die Meßsonde in einem Gehäuse befindlich ist und das Gehäuse an seiner zum Strahl hin gerichteten Seite eine flexible Membran aufweist oder mit einer solchen abgeschlossen ist. Die Membran verformt sich beim Auftreffen des Strahls, wobei diese Verformung durch eine im Inneren des Gehäuses angeordnete Sensorik detektiert wird, um ein Schalt- und/oder Steuersignal abzuleiten.

## Beschreibung

Die Erfindung betrifft eine Anordnung zum Abtasten des Unterlaufstrahls eines Hydrozyklons, insbesondere zur Steuerung desselben durch Erfassung des Strahlumschlagens bzw. des Austragzustandes als Schirm- oder Strangaustrag am Grobkornaustrag mittels einer Meßsonde gemäß Oberbegriff des Patentanspruchs 1.

Hydrozyklone sind sowohl bei der Aufbereitung mineralischer Rohstoffe als auch in zunehmendem Maße in der Umwelttechnik, z.B. beim Bodenwaschen, der bevorzugte Klassierapparat für Trennkorngrößen im Bereich von 10µm bis 100µm. Ziel der Klassierung ist dabei die trennscharfe Abtrennung z.B. des kontaminierten Feinkorns vom gewaschenen Grobkorn des Bodens.

Das Grobprodukt von Hydrozyklonen, die wie erwähnt zur Korngrößentrennung in Suspensionen eingesetzt werden, wird durch die sogenannte Unterlaufdüse am unteren Ende des Zyklons ausgetragen. Dabei bildet sich ein Austragsstrahl aus, dessen Form vom Betriebszustand des Hydrozyklons abhängt. Man unterscheidet hier zwischen Strangaustrag und Schirmaustrag. Für die Prozeßsteuerung des Hydrozyklons ist dabei ein Abtasten dieses Auslaufstrahls erforderlich, wobei folgende Voraussetzungen erfüllt werden müssen.

Die beginnende Ausbreitung des Strahls, d.h. der Übergang vom Strang- zum Schirmaustrag, muß sicher mit einer Sonde detektiert werden, die möglichst nahe am Austragsstrahl positioniert ist. Diese Sonde muß dem rauhen Hydrozyklonbetrieb bei Industrieeinsatz angepaßt sein. Es besteht darüber hinaus die Aufgabe, daß das Meßsignal nicht durch Verschmutzung infolge von Schlammverunreinigung beeinflußt werden darf.

Aus der deutschen Patentanmeldung 199 63 284.7 ist eine Anordnung zur Regelung des Betriebs eines Hydrozyklons oder einer Hydrozyklonanordnung bekannt, bei der die Form des Austragsstrahls im Unterlauf mindestens eines Hydrozyklons mit Hilfe einer Sonde erfaßt und das Sondensignal dem Regelventil in der Oberlaufleitung des Hydrozyklons oder der Oberlauf-Sammelleitung einer Hydrozyklonbatterie für die Verstellung des Volumensplits zugeführt wird. Konkret ist eine Sonde vorgesehen, die den Umschlag der Austragsform des Unterlaufstroms von Strang zu Schirm erfaßt.

Es wird also gemäß DE 199 63 284.7 der erkannte Umschlag im Unterlauf als Indikator für den Zustand des Hydrozyklons regelungstechnisch genutzt. Solange im Unterlauf des Hydrozyklons Strangform beobachtet werden kann, ist Sediment im Konus gespeichert, was einen hohen Feststoffgehalt bzw. einen hohen Eindickungsgrad im Unterlauf bedeutet, aber auch einen zumindest partiellen Fehlaustrag von grobkörnigem Gut im Oberlauf nach sich zieht. Im Falle des Schirmaustrags ist kein Sediment mehr im Hydrozyklonkonus enthalten, so daß ein maximaler Feststoffaustrag gewährleistet ist. Weiterhin ist der Feststoffgehalt im Unterlauf bzw. der Eindickungsgrad wesentlich geringer als beim Strangaustrag. Bezüglich der einzusetzenden Meßsonde wird nach DE 199 63 284.7 auf eine Berührungssonde verwiesen.
Es hat sich jedoch gezeigt, daß insbesondere eine derartige Berührungssonde durch die erwähnte Schlammverunreinigung nicht die erforderliche Langzeitstabilität und Meßgenauigkeit aufweist.

Auch der Einsatz einer indirekten Sensorik, z.B. mittels kapazitiver Sonden ist problematisch, da diese beim unvermeidlichen Inkontaktkommen mit dem Suspensionsstrahl stark verschmutzt werden und entsprechenden Ausfällen unterliegen.

Eine denkbare Alternative besteht in der indirekten Abtastung des Suspensionsstrahls mit Hilfe der an sich bekannten Lichtschrankentechnik. Hierbei wird die Verschmutzung von Lichtquelle bzw. Lichtempfänger dadurch verhindert, daß diese Einrichtungen im ausreichenden großen Abstand vom Suspensionsstrahl positioniert werden. Dies wird aber nicht der Forderung gerecht, daß die Sonde als Teil eines Hydrozyklons mit diesem verbunden und in unmittelbarer Nähe desselben angeordnet sein soll.

Es ist daher Aufgabe der Erfindung, eine Anordnung zum Abtasten des Unterlaufstrahls eines Hydrozyklons, insbesondere zur Steuerung desselben durch Erfassung des Strahlumschlagens am Grobkornaustrag mittels einer Meßsonde anzugeben, wobei die Anordnung nahe am Austragsstrahls positionierbar und unempfindlich gegen Verschmutzungen durch den Suspensionsstrahl bzw. durch Suspensionstropfen und -nebel ist.

Die Lösung der Aufgabe der Erfindung erfolgt mit einem Gegenstand gemäß den Merkmalen des Patentanspruchs 1, wobei die Unteransprüche mindestens zweckmäßige Ausgestaltungen und Weiterbildungen umfassen.

Der Grundgedanke der Erfindung besteht demgemäß darin, die Meßsonde in einem Gehäuse anzuordnen, wobei das Gehäuse an seiner zum Strahl hin gerichteten Seite an sich offen ist, jedoch durch eine flexible Membran insbesondere in Form einer Kappe abgeschlossen wird.
Die Membran ist dann beim Auftreffen des Strahls einer Verformung unterworfen, die wiederum vom im Gehäuseinneren geschützt angeordneten Sensor detektiert wird.

Demnach berührt der Suspensionsstrahl zwar die Membran, nicht jedoch die im Inneren des Gehäuses befindliche Sensorik, so daß Meßwertverfälschungen durch Verschmutzungen auf ein Minimum reduziert werden können.

Das Gehäuse mit Membran ist mit dem Hydrozyklon über geeignete Elemente verbunden und zum Strahl positionierbar.

Wie dargelegt, kann bei einer bevorzugten Ausführungsform die Membran als elastische, auswechselbare Gehäusekappe ausgebildet sein.

Hinsichtlich der Sonde können kapazitive Abstandsmeßsonden, aber auch Ultraschallsensoren Anwendung finden. Bevorzugt eingesetzte Ultraschallsensoren besitzen piezoelektrische Schallwandler, die abwechselnd als Sender und Empfänger arbeiten. Das Funktionsprinzip beruht darauf, daß im Sendebetrieb ein Schallpaket abgestrahlt wird, wobei der Empfänger die Zeit mißt, welche vergeht, bis das reflektierte Signal eintrifft. Durch eine Selbstkalibrierung kann erreicht werden, daß die Meßsensorik nicht primär den Abstand zwischen feststehendem Ultraschallsensor und der Membran, sondern nur den Verformungsanteil der Membran selbst bestimmt, so daß ablagerungsbedingte Formveränderungen auf der Außenoberfläche der Membran, die zu einem geänderten Verformungsverhalten führen, eliminiert werden können.

Ebenso besteht bei einer Ausführungsform die Möglichkeit, die Membraninnenseite mit einer Reflexionsbeschichtung zu versehen, wobei hier die Sonde mindestens ein Strahlung emittierendes sowie ein strahlungssensitives Element zur Erfassung einer geänderten Strahlreflexion bei Membranverformung umfaßt.

Auch kann der Sensor eine Lichtschranke umfassen, deren Strahlungsweg bei Verformung der Membran unterbrochen wird.

Letztendlich kann die Sonde als Berührungssonde ausgebildet sein, welche beim Inkontaktkommen mit der Membraninnenseite ein Schalt- oder Steuersignal liefert.

Bei der Ausführungsform der Membran als gummielastische Kappe, die auf das Gehäuse mit im Inneren befindlichem Sensor aufgesteckt wird, läßt sich die Kappe als Verschleißteil schnell und mit geringem Aufwand austauschen. Für den Fall, daß das Verbindungselement zwischen Gehäuse und Hydrozyklon Verstellmittel enthält, kann in einfacher Weise ein exaktes Positionieren der Anordnung hin zur Unterlaufdüse erfolgen.

Alles in allem gelingt es mit der vorstehend beschriebenen Erfindung, eine Anordnung anzugeben, die in kostengünstiger und sicherer Weise wenig wartungsintensiv in der Lage ist, einen Unterlaufstrahl eines Hydrozyklons abzutasten, wobei das erhaltene Signal zur Steuerung des Betriebs des Hydrozyklons Verwendung finden kann.

Die Erfindung soll nachstehend anhand eines Ausführungsbeispiels sowie unter Zuhilfenahme einer Figur näher erläutert werden.

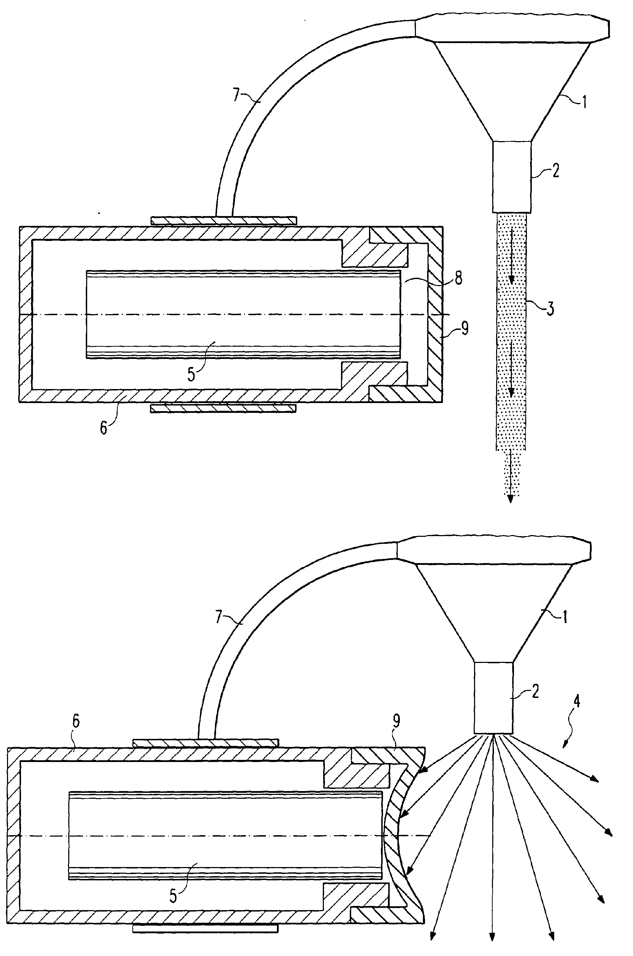

Die Figur zeigt den Bereich eines Hydrozyklons 1 mit Unterlaufdüse 2, wobei im oberen Bildteil von einem Strangaustrag 3 und im unteren Bildteil vom Schirmaustrag 4 ausgegangen wird.

Eine Meßsonde 5 befindet sich in einem Gehäuse 6, welches wiederum über eine verstellbare Halterung 7 mit dem Hydrozyklon 1 mechanisch verbunden ist.

Beim gezeigten Beispiel kann das Gehäuse eine im wesentlichen zylindrische, aber auch rechteckige Form besitzen mit einem Öffnungsbereich 8.

Der Öffnungsbereich 8 des Gehäuses 6 ist mit einer z.B. gummielastischen verschleißfesten Kappe 9 verschlossen, welche als Membran wirkt. Die Kappe 9 dichtet das Gehäuse 6 und die im Inneren befindliche Meßsonde 5 gegen die Umgebung ab.

Die Anordnung wie vorbeschrieben wird über die verstellbare Halterung 7 so positioniert, daß bei Strangaustrag 3, d.h. bei einem Betriebszustand, bei dem die Suspension die Sonde nicht berührt, die Kappe 9 nicht mit dem Strahl in Berührung kommt und selbst einen definierten Abstand zur Meßsonde 5 hält.

Beim Übergang vom Strangaustrag 3 zum Schirmaustrag 4, wie im unteren Bildteil gezeigt, verformt sich die membranartige Oberfläche der Kappe 9 in Richtung des Gehäuseinneren, d.h. es verändert sich der vorherige Abstand zwischen Meßsonde 5 und Kappe 9.

Die Meßsonde 5 kann je nach Ausführungsform auf Berührung bzw. Annäherung der Kappe oder Membran 9 reagieren und den Umschlag zwischen Strang- und Schirmaustrag detektieren.

Bei Einengung des Schirms zum Strang, d.h. beim nicht mehr Vorliegen einer Berührung oder Annäherung des Strahls bezüglich der Kappe 9 geht die Kappe bzw. die Membran 9 in ihren Ausgangszustand zurück und der Zustand des Schalt- oder Steuersignals der Meßsonde 5 ändert sich dementsprechend.

Es hat sich gezeigt, daß die Anordnung gemäß Ausführungsbeispiel eine hohe Funktionszuverlässigkeit ganz unabhängig davon aufweist, ob mehr oder weniger dicke Schlammschichten die Kappe oder Membran 9 bedecken. Die als Membransonde zu bezeichnende Lösung ist eine Variante der Strahldetektion, gekennzeichnet durch Anwendung einfacher Meßprinzipien, und die durch eine Verstelleinrichtung nahe am Austragsstrahl bzw. dicht am Hydrozyklon positionier- und befestigbar ist. Verschmutzungen bedingt durch die Suspension selbst wirken sich nicht auf die Lebensdauer der Sensorik aus.

Die Kappe oder Membran 9 kann sehr leicht vom Gehäuse 6 entfernt und durch eine neue Kappe ersetzt werden. Auch läßt sich die Kappe bedarfsweise leicht reinigen, wofür auch ein entsprechendes Verschwenken über die verstellbare Halterung 7 zweckmäßig ist.

Beim Ausführungsbeispiel wird von einer Meßsonde 5 ausgegangen, die als Berührungssonde oder Abstandssonde gestaltet ist. Hinsichtlich der Abstandsmeßmethodik kann auf die sich ändernde Kapazität zwischen Membraninnenseite und Sonde, aber auch eine Entfernungsbestimmung mittels Ultraschall zurückgegriffen werden.

Alternativ besteht die Möglichkeit, die Innenseite der Kappe 9 mit einer Reflexionsbeschichtung zu versehen, wobei die Meßsonde 5 optische Strahlung emittierende sowie strahlungssensitive Elemente umfaßt, die der Ermittlung einer geänderten Strahlreflexion dienen, mit deren Hilfe dann auf eine Membranverformung geschlossen werden kann.

Auch kann der Sensor als Lichtschranke im Gehäuseinneren angeordnet sein, wobei Sender und Empfänger gegenüberliegend befindlich sind und wobei die Unterbrechung des Strahlungswegs bei Verformung der Membran erfaßt wird.

Die Kappe oder Membran 9 ist über eine im einzelnen nicht dargestellte umlaufende Nut gehäuseseitig fixiert, wobei ergänzend die Möglichkeit besteht, die Kappe mit einem Schlauchband oder einer Schlauchschelle zu sichern, so daß ein Wegdrücken dieser beim Auftreffen des Unterlaufstrahls ausgeschlossen ist.

Ergänzend oder alternativ besteht die Möglichkeit, im Gehäuse eine Sensorik vorzusehen, die auf die sich ändernden Geräuschverhältnisse beim Übergang von Strang- zu Schirmaustrag reagiert. Hierbei wird auf die Erkenntnis zurückgegriffen, daß mit dem Auftreffen des Strahls auf die Membran sich ein Grundgeräuschpegel signifikant ändert, wobei aus der Pegeldifferenz ein Schalt- oder Steuersignal abgeleitet wird.

### Bezugszeichenaufstellung

- 1: Hydrozyklon
- 2: Unterlaufdüse
- 3: Strangaustrag
- 4: Schirmaustrag
- 5: Meßsonde
- 6: Gehäuse
- 7: verstellbare Halterung
- 8: Öffnungsbereich des Gehäuses
- 9: Kappe/Mebran

## Patentansprüche

1. Anordnung zum Abtasten des Unterlaufstrahls eines Hydrozyklons, insbesondere zur Steuerung desselben durch Erfassung des Strahlumschlagens am Grobkornaustrag mittels einer Meßsonde,
**dadurch gekennzeichnet, daß**
die Meßsonde in einem Gehäuse befindlich ist, wobei das Gehäuse an seiner zum Strahl hin gerichteten Seite eine flexible Membran aufweist oder mit einer solchen abgeschlossen ist, die Membran beim Auftreffen des Strahls einer Verformung unterworfen wird und der im Gehäuseinneren angeordnete Sensor die Verformung detektiert.

2. Anordnung nach Anspruch 1,
**dadurch gekennzeichnet, daß**
die Membran als elastische, auswechselbare Gehäusekappe ausgebildet ist.

3. Anordnung nach Anspruch 1 oder 2,
**dadurch gekennzeichnet, daß**
das Gehäuse mittels eines Verbindungselements am Hydrozyklon befestigt ist.

4. Anordnung nach Anspruch 3,
**dadurch gekennzeichnet, daß**
das Verbindungselement Verstellmittel zum exakten Positionieren des Gehäuses mit Membran zum Unterlaufstrahl aufweist.

5. Anordnung nach einem der vorangegangenen Ansprüche,
**dadurch gekennzeichnet, daß**
die Sonde eine kapazitive Abstandsmeßsonde oder ein Ultraschall-Sensor ist.

6. Anordnung nach einem der Ansprüche 1 bis 4,
**dadurch gekennzeichnet, daß**
die Membraninnenseite eine Reflexionsbeschichtung aufweist und die Sonde mindestens ein Strahlung emittierendes sowie ein strahlungssensitives Element zur Erfassung einer geänderten Strahlreflexion bei Membranverformung umfaßt.

7. Anordnung nach einem der Ansprüche 1 bis 4,
**dadurch gekennzeichnet, daß**
der Sensor als Lichtschranke ausgebildet ist, deren Strahlungsweg bei Verformung der Membran unterbrochen wird.

8. Anordnung nach einem der Ansprüche 1 bis 4,
**dadurch gekennzeichnet, daß**
die Sonde als Berührungssonde ausgebildet ist, welche beim Inkontaktkommen mit der Membraninnenseite ein Schalt- oder Steuersignal liefert.
